(19) Europäisches Patentamt
European Patent Office
Office européen des brevets

(11) **EP 3 491 271 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(21) Anmeldenummer: **17739983.9**

(22) Anmeldetag: **14.07.2017**

(51) Int Cl.:
**F16H 3/72** [(2006.01)]

(86) Internationale Anmeldenummer:
**PCT/EP2017/067836**

(87) Internationale Veröffentlichungsnummer:
**WO 2018/019616 (01.02.2018 Gazette 2018/05)**

(54) **ANTRIEBSVORRICHUTNG UND VERFAHREN ZUR DREHZAHLLIMITIERUNG**

DRIVE DEVICE AND METHOD FOR SPEED LIMITATION

DISPOSITIF D'ENTRAÎNEMENT ET PROCÉDÉ DE LIMITATION DE LA VITESSE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2016 DE 102016213639**

(43) Veröffentlichungstag der Anmeldung:
**05.06.2019 Patentblatt 2019/23**

(73) Patentinhaber: **Voith Patent GmbH**
**89522 Heidenheim (DE)**

(72) Erfinder:
• **LAUTER, Bernd**
**89567 Sontheim an der Brenz (DE)**
• **LINDENMAIER, Jochen**
**89542 Herbrechtingen (DE)**

(74) Vertreter: **Voith Patent GmbH - Patentabteilung**
**St. Pöltener Straße 43**
**89522 Heidenheim (DE)**

(56) Entgegenhaltungen:
WO-A1-2016/172742    DE-A1-102014 210 864
FR-A1- 2 911 539    US-A- 5 558 589
US-A1- 2009 010 094

**Beschreibung**

Die Erfindung betrifft eine Antriebsvorrichtung umfassend ein Überlagerungsgetriebe, eine Hauptantriebsmaschine, die mit einer Eingangswelle des Überlagerungsgetriebes verbunden ist, einen oder mehrere Hilfsantriebe und eine Ausgangswelle, die mit einer Arbeitsmaschine verbunden werden kann, wobei das Überlagerungsgetriebe ein Planetengetriebe aufweist mit einem Hohlrad, einem Sonnenrad, einem Planetenträger und mehreren Planetenrädern und wobei die Eingangswelle mit dem Hohlrad, die Ausgangswelle mit dem Sonnenrad und der oder die Hilfsantriebe über eine Getriebestufe mit dem Planetenträger verbunden ist.

Weiterhin betrifft die Erfindung ein Verfahren zur Drehzahllimitierung bei Ausfall oder Schnellabschaltung der Hauptantriebsmaschine oder eines Hilfsantriebes an einer solchen Antriebsvorrichtung.

Bei einem Überlagerungsgetriebe werden allgemein zwei Wellen des Planetengetriebes durch voneinander unabhängige Antriebe so angetrieben, dass die Drehzahlen an der dritten Welle, der Ausgangswelle, addiert oder subtrahiert werden. Ist einer der Antriebe regelbar, dann kann so eine stufenlose Drehzahlregelung für die Ausgangswelle erreicht werden.

Aus dem Stand der Technik sind Antriebsvorrichtungen mit einem Überlagerungsgetriebe bekannt, bei dem eine Hauptantriebsmaschine über die Eingangswelle das Hohlrad eines Planetengetriebes und ein regelbarer Hilfsantrieb über eine Getriebestufe den Planetenträger antreibt, während die Arbeitsmaschine über die Ausgangswelle mit der Sonne verbunden ist. Durch eine solche Antriebsvorrichtung kann die Drehzahl an der Ausgangswelle in einem recht großen Drehzahlbereich stufenlos eingestellt werden und das bei konstant laufender Hauptantriebsmaschine.

Des Weiteren ist es möglich, den Hauptantrieb lastfrei anzuschleppen, indem der Hilfsantrieb beim Hochlaufen jeweils die Drehzahl der Hauptantriebsmaschine einprägt. Erst wenn der Hauptantrieb in der Nähe der Nenndrehzahl ist und damit ein hohes Drehmoment aufbringen kann, wird die Last langsam beschleunigt, indem die Kompensation der Drehzahl durch den Hilfsantrieb reduziert wird.

Eine konkrete Ausführung ist beispielsweise in der Schrift DE 102014210864 A1 gezeigt. Hier ist nun zusätzlich eine Kupplung zwischen Hilfsantrieb und der ersten Getriebestufe zum Planetenträger vorhanden. Diese Kupplung ermöglicht es, den Hilfsantrieb komplett vom Planetengetriebe zu trennen. Dadurch kann bei einer Störung des Hilfsantriebes dieser stillgelegt werden und der Rest kann zumindest mit der Hauptantriebsmaschine bei konstanter Drehzahl weiterbetrieben werden. Weiterhin ist in der nachveröffentlichten Schrift WO 2016/172742 A1 eine Antriebsvorrichtung mit einer Zusatztriebverbindung zwischen dem Hilfsantrieb und der Eingangswelle und mit einer schaltbaren Kupplung gezeigt.

Genutzt werden solche Antriebsvorrichtungen insbesondere zum Antreiben von Pumpen, Verdichtern oder Kompressoren mit großer Leistung, wie sie zum Beispiel in der Öl- und Gasindustrie oder in thermischen Kraftwerken verwendet werden.

Nicht zufriedenstellend gelöst ist dabei allerdings das Problem, dass der Hilfsantrieb und das Getriebe beschädigt werden können, wenn die Hauptantriebsmaschine im Betrieb ausfällt oder vom Netz getrennt werden muss. Da in den oben genannten Anwendungsfällen meist die Massenträgheit der Hauptantriebsmaschine viel größer ist als die der angetriebenen Arbeitsmaschine, wird bei Ausfall des Antriebsmomentes an der Hauptantriebsmaschine die Drehzahl der Arbeitsmaschine schnell gegen Null gehen. Aufgrund des Drehzahlgleichgewichtes am Planetengetriebe wird in dieser Getriebevariante der Planetenträger und der Hilfsantrieb stark beschleunigt. Dabei können unzulässige Drehzahlen am Planetenträger auftreten. Das kann durch die Kupplung am Hilfsantrieb nicht verhindert werden, es ist sogar so dass durch das Abkuppeln zwar der Hilfsantrieb geschützt werden kann, die Drehzahl am Planetenträger dann aber noch schneller ansteigen würde. Im Stand der Technik wird vorgeschlagen, das durch eine Bremse am Planetenträger zu verhindern, was aber zur Kupplung noch eine zusätzliche Komponente erfordert. Das erhöht die Kosten der Antriebsvorrichtung und benötigt mehr Bauraum - zwei gravierende Nachteile.

Die Aufgabe der Erfindung ist es nun, eine verbesserte Lösung für das obengenannte Problem zu finden.

Für die Vorrichtung wird die Aufgabe durch eine Antriebsvorrichtung gemäß Anspruch 1 gelöst. Weitere vorteilhafte Merkmale der erfindungsgemäßen Ausführung, die die Vorrichtung weiter verbessern, finden sich in den entsprechenden Unteransprüchen. Dabei wird die Vorrichtung so weiterentwickelt, dass eine Zusatztriebverbindung mit konstanter zwischen dem Hilfsantrieb auf der einen Seite und dem Hohlrad oder einem Ritzel auf der Eingangswelle auf der anderen Seite vorhanden ist, wobei in dieser Zusatztriebverbindung eine schaltbare Kupplung vorhanden ist, die die Zusatztriebverbindung aktivieren oder unterbrechen kann, derart dass bei Unterbrechung durch die Kupplung die Verbindung zwischen Hilfsantrieb und Planetenträger über die erste Getriebestufe aktiviert bleibt. Aktiviert meint hierbei, dass Leistung und Drehmoment übertragen werden kann. So kann mit Hilfe der Kupplung der Hilfsantrieb und die Hauptantriebsmaschine auf der Eingangsseite des Planetengetriebes über die Zusatztriebverbindung direkt gekoppelt werden. Bei geeigneter Wahl der Übersetzung für die Zusatztriebverbindung kann bei einem Ausfall des Hauptantriebes ein Großteil der Energie in der Kupplung durch die Umbeschleunigung des Hilfsantriebes verzehrt werden. Bei geeigneter verzögerter Ansteuerung der Kupplung kann ein größerer Teil der Energie auch in den Hilfsantrieben verzehrt werden, so dass die Kupplung kleiner und leichter ausgelegt werden kann. Eine Überdrehzahl des Hilfsantriebes oder des Planetenträgers wird damit wirksam verhindert. Somit sind besonders die Planetenbolzen vor einer Beschädigung durch zu hohe Fliehkräfte geschützt.

Bei geeigneter Ansteuerung der Kupplung, so dass möglichst viel Energie im Hilfsantrieb und weniger Energie in der Kupplung verzehrt wird, kann die Temperaturentwicklung in der Antriebsvorrichtung gering gehalten werden. Das ist ein besonderer Vorteil gegenüber der bekannten Variante mit Bremse, vor allem wenn zum Beispiel Anwendungen im explosionsgefährdeten Bereich geplant sind, beispielsweise Verdichter in der Öl- und Gasindustrie oder Ventilatoren im Bereich brennbarer Stäube. Oftmals sind dort bestimmte Temperaturgrenzen vorgegeben, die nicht überschritten werden dürfen, auch nicht im Störfall.

Um eine unzulässige Temperaturerhöhung an den Hilfsantrieben zu reduzieren und um ihre Leistung, d.h. ihr Drehmoment auch bei geringer Drehzahl abrufen zu können, ist es von Vorteil, wenn der oder die Hilfsantriebe je einen Fremdkühler aufweisen, der als Fremdlüfter mit separatem Lüftermotor ausgeführt ist. Alternativ können der oder die Hilfsantriebe je einen Fremdkühler aufweisen, der als Wasserkühler ausgeführt ist.

Bei Normalbetrieb ist die Kupplung geöffnet und die Zusatztriebverbindung unterbrochen. Die Hilfsantriebe sind über die Hilfsantriebswellen und die erste Getriebestufe mit dem Planetenträger verbunden. Im Störfall wird die Kupplung wie oben beschrieben geschlossen und die Zusatztriebverbindung aktiviert.

Die Anordnung ist gut geeignet für hohe Drehzahlen am Abtrieb, wie sie beispielsweise bei schnelllaufenden Kompressoren oder bei großen Ventilatoren gefordert sind, weil dadurch der Bauraum und das Gewicht der Antriebsvorrichtung relativ gering gehalten werden können.

In der erfindungsgemäßen Anordnung bietet es zusätzlich den Vorteil, dass die Antriebsvorrichtung bei geschlossener Kupplung alleine durch den Hilfsantrieb die Arbeitsmaschine antreiben kann, also bei stromloser Hauptantriebsmaschine. Das ist mit den bisher bekannten Vorrichtungen nicht möglich. Der Vorteil besteht unter anderem darin, dass somit im niedrigen Drehzahlbereich die Arbeitsmaschine alleine durch die Hilfsantriebe betrieben werden kann. Kommt die Drehzahl an der Eingangswelle in den Bereich der Nenndrehzahl der Hauptantriebsmaschine, kann diese ans elektrische Netz geschaltet werden. So kann die Zeitdauer der unerwünschten Einschaltstromspitzten deutlich verringert werden.

Unter Getriebestufe wird eine Triebverbindung verstanden, die mit konstanter Übersetzung also festem Drehzahlverhältnis Leistung und Drehmoment überträgt. Die erste Getriebestufe wird bevorzugt durch ein einstufiges Stirnradgetriebe zwischen einem Zahnrad auf der Hilfsantriebswelle und dem Planetenträger, der als ein Zahnrad ausgeführt ist oder der ein auf ihn gefügtes Zahnrad trägt, gebildet. Besonders bevorzugt ist es als sogenannte Räderkette ausgebildet, das heißt aus mehreren mindestens zwei Zahnrädern, die nacheinander miteinander in Eingriff stehen und so das Drehmoment auf das Zahnrad am Planetenträger übertragen. Alternativ kann die erste Getriebestufe auch durch ein mehrstufiges Anpassgetriebe oder einen Kettentrieb oder einen Zahnriementrieb gebildet werden.

Die Zusatztriebverbindung kann ebenfalls bevorzugt als einstufiges Stirnradgetriebe aus einem Zahnrad auf der Hilfsantriebswelle und einer Außenverzahnung auf dem Hohlrad oder einem zusätzlichen Ritzel auf der Eingangswelle ausgeführt werden. Die bei der ersten Getriebestufe genannten Varianten zur Ausführung können auch in der Zusatztriebverbindung vorteilhafterweise zur Anwendung kommen, insbesondere die Räderkette. Die benötigte Kupplung ist bevorzugt zwischen der Hilfsantriebswelle und dem Zahnrad auf der Hilfsantriebswelle vorgesehen. So müssen das oder die Zahnräder der Zusatztriebverbindung bei geöffneter Kupplung nicht mitbewegt werden, was vorteilhaft sein kann. Bei der Variante mit einem zusätzlichen Ritzel auf der Eingangswelle kann die Kupplung alternativ zwischen dem Ritzel und der Eingangswelle vorgesehen sein.

Die Zusatztriebverbindung kann durch eine zweite Getriebestufe gebildet werden, wobei die Zusatztriebverbindung von einer Hilfsantriebswelle über die zweite Getriebestufe direkt auf das Hohlrad oder das Ritzel einwirkt. Sie kann auch durch eine zweite und eine dritte Getriebestufe gebildet werden, wobei die zweite Getriebestufe zunächst Drehmoment von der Hilfsantriebswelle auf eine Zwischenwelle überträgt und die dritte Getriebestufe Drehmoment von der Zwischenwelle auf das Ritzel auf der Eingangswelle oder auf das Hohlrad überträgt. Oder die Zusatztriebverbindung ist so ausgebildet, dass von einer Hilfsantriebswelle über eine erste Getriebestufe auf den Planetenträger, über eine zweite Getriebestufe vom Planetenträger auf eine Zwischenwelle und über eine dritte Getriebestufe von der Zwischenwelle auf das Hohlrad oder das Ritzel Drehmoment übertragen wird. Bevorzugt können hierbei die erste Getriebestufe und/oder die dritte Getriebestufe als Räderkette aus je mindestens zwei Zahnrädern zusätzlich zum Zahnrad oder Ritzel, auf das Drehmoment übertragen werden soll, aufgebaut sein. Die Kupplung kann bevorzugt zwischen zweiter und dritter Getriebestufe vorgesehen sein und die Zwischenwelle in eine erste und eine zweite Zwischenwelle teilen. Das ermöglicht eine besonders bauraumsparende Version und ein Gehäuse mit Teilfuge.

Besonders vorteilhaft ist die erfinderische Ausführung, wenn die Hauptantriebsmaschine nur drehzahlkonstant betreibbar ist und der oder die Hilfsantriebe drehzahlgeregelt betreibbar sind und insbesondere der oder die Hilfsantriebe als Niederspannungsmotoren ausgeführt sind. Ein Großteil der Antriebsleistung kann von der konstant betriebenen Hauptantriebsmaschine aufgebracht werden. Diese benötigt keinen Frequenzumformer, was Investitionskosten spart. Bevorzugt wird die Hauptantriebsmaschine als Mittelspannungsmotor ausgeführt, also mit einer Spannung von mehr als 1 kV. Die Drehzahlregelung erfolgt über die Hilfsantriebe, die eine geringere Leistung benötigen und die bevorzugt als Niederspannungsmotoren mit einer Spannung von weniger als 1 kV ausgeführt sind. Somit fallen die dafür benötigten Frequenzumformer kleiner und kostengünstiger aus.

Um eine unzulässige Temperaturerhöhung an den Hilfsantrieben zu reduzieren und um ihre Leistung, d.h. ihr Drehmoment auch bei geringer Drehzahl abrufen zu können, ist es von Vorteil, wenn der oder die Hilfsantriebe je einen Fremdkühler aufweisen, der als Fremdlüfter mit separatem Lüftermotor ausgeführt ist und insbesondere einen Sensor zur Überwachung der Wicklungstemperatur am separaten Lüftermotor aufweist. Die im Stand der Technik verwendeten Lüfter, die auf der Motorwelle sitzen und mit der Motordrehzahl mitdrehen, sind dafür nicht ausreichend. Mit einem Fremdkühler ist die Kühlleistung unabhängig von der Drehzahl des Hilfsantriebes steuerbar.

Alternativ können der oder die Hilfsantriebe je einen Fremdkühler aufweisen, der als Wasserkühler ausgeführt ist und insbesondere einen Sensor zur Überwachung der Kühlwassertemperatur im Kühlerrücklauf und/oder einen Sensor zur Überwachung der Kühlwasserpumpe aufweist. Auch hiermit ist eine unabhängige Steuerung der Kühlleistung möglich. Als Kühlwasser kann jedes geeignete flüssige Kühlmittel verwendet werden.

Die zusätzlichen Sensoren ermöglichen eine Erkennung der Kühlleistung und somit eine Erkennung der Belastung des Hilfsantriebes. Diese Daten können zur Regelung der gesamten Antriebsvorrichtung und auch zur vorausschauenden Erkennung von Störfällen genutzt werden..

Besonders vorteilhaft ist die Kupplung so ausgeführt ist, dass sie im nicht angesteuerten Zustand, insbesondere bei Energieausfall, in den geschlossenen Zustand übergeht und dass die Kupplung bevorzugt als Lamellen-, Klauen- oder Visco-Kupplung ausgeführt ist. Durch die stromlos-geschlossene Ausführung der Kupplung ist gewährleistet, dass der Schutz vor Überdrehzahl auch bei komplettem Energieausfall gegeben ist. Lamellen-, Klauen- oder Visco-Kupplungen oder hydrodynamische Kupplungen sind besonders gut geeignet hohe Leistung zu übertragen.

Um eine gezielt verzögerte Schaltung der Kupplung zu ermöglichen, muss der richtige Schaltzeitpunkt bestimmt werden. Dazu ist es notwendig, die Drehzahlen an der Antriebsvorrichtung zu kennen. Deshalb ist es vorteilhaft, wenn diese so ausgeführt ist, dass von den drei Drehzahlen (n1,n2,n3): Hauptantriebsmaschine , Ausgangswelle und Hilfsantrieb zumindest zwei Drehzahlen erfasst oder gemessen werden können. Die dritte notwendige Drehzahl am Planetengetriebe kann über die Drehzahlgleichungen (Willis-Gleichungen) bestimmt werden. Die Erfassung oder Messung kann insbesondere mit Hilfe von Impulsgebern am Antrieb und/oder Drehzahlsensoren erfolgen.

Um die Belastung und gegebenenfalls eine aufkommende Störung vorausschauend zu erkennen, ist es von Vorteil, wenn der oder die Hilfsantriebe einen Sensor zur Erfassung der Wicklungstemperatur und/oder einen Sensor zur Erfassung der Lagertemperatur aufweisen. Insbesondere bei hohen Anforderungen an die Temperaturbegrenzung in der Antriebsanordnung ist eine solche Ausführung zu bevorzugen. Weiterhin kann aus den gleichen Gründen die Hauptantriebsmaschine einen Sensor zur Erfassung der Wicklungstemperatur und/oder einen Sensor zur Erfassung der Lagertemperatur aufweisen.

Für das Verfahren wird die Aufgabe durch eine Ausführung gemäß Anspruch 11 gelöst. Weitere vorteilhafte Merkmale des erfindungsgemäßen Verfahrens, die dieses weiter verbessern, finden sich in den entsprechenden Unteransprüchen.

Es werden folgende Verfahrensschritte an einer erfindungsgemäßen Antriebsvorrichtung ausgeführt, um eine unerwünschte Überdrehzahl am Hilfsantrieb und am Planetenträger zu vermeiden:

A) Erkennen eines Ausfalls oder einer Schnellabschaltung der Hauptantriebsmaschine oder eines Hilfsantriebes;
S) und dann Schließen der Kupplung.

Durch das Schließen der Kupplung nach Erkennen einer Störung werden Hauptantriebsmaschine und Hilfsantriebe über die zweite Stirnradstufe fest miteinander gekoppelt. Somit wird vermieden, dass dabei die Hilfsantriebe und der Planetenträger aufgrund der hohen Massenträgheit der Hauptantriebsmaschine zu stark beschleunigt werden. Das Risiko einer Beschädigung aufgrund zu hoher Drehzahlen wird vermieden.

Das Erkennen eines Ausfalls oder einer Schnellabschaltung, wobei hiervon auch ein bevorstehender Ausfall oder eine bevorstehende Schnellabschaltung mit umfasst ist, kann beispielsweise über die Antriebssteuerung und/oder über Signale aus der Stromversorgung, insbesondere bei Ausfall des Versorgungsnetzes oder Auslösen von Sicherungseinrichtungen oder Not-Aus-Einrichtungen, erfolgen. Ebenso können Fehler- oder Störmeldungen verwendet werden.

Unter Schließen der Kupplung wird der Schaltzeitpunkt der Ansteuerung der Kupplung verstanden. Nach dem Ansteuern kommt es zunächst zu einer Phase, in der an der Kupplung ein gewisser Schlupf herrscht, bis dann eine weitgehend vollständige Drehmomentübertragung erreicht wird.

Um die Drehzahllimitierung weiter zu verbessern und die Belastung der Kupplung zu reduzieren, ist es von Vorteil wenn die folgenden Schritte zusätzlich ausgeführt werden:

B) Wiederholtes Ermitteln oder Messen der Drehzahlen an einem der Hilfsantriebe oder dem Planetenträger, an der Eingangswelle oder der Hauptantriebsmaschine und an der Ausgangswelle oder der Arbeitsmaschine;

C) Berechnen des Synchronisierungspunktes aus der Bedingung: Drehzahl (n2) der Hauptantriebsmaschine ist vor dem Schließen der Kupplung gleich der Drehzahl (n2) nach dem Schließen der Kupplung;

S1) Sofortiges Schließen der Kupplung nur, falls sich die Drehzahl (n3) des Hilfsantriebes von der Synchronisierungsdrehzahl (n_syn) entfernt,

S2) oder ansonsten verzögertes Schließen der Kupplung, sobald die Drehzahl (n3) des Hilfsantriebes maximal um 5%, bevorzugt maximal um 3% von der Synchronisierungsdrehzahl (n_syn) abweicht.

Prozessbedingt können manche Schritte ganz oder teilweise parallel erfolgen. Insbesondere die Schritte B) und C) können parallel gemacht werden. Beziehungsweise der Schritt B) kann auch laufend während des Betriebes erfolgen. Die Schritte S1) und S2) sind als Fallunterscheidung anzusehen und als Detaillierung von Schritt S): Ist die Bedingung "Drehzahl (n3) des Hilfsantriebes entfernt sich von Synchronisierungsdrehzahl" erfüllt, so wird S1) umgesetzt. Ist dagegen die Bedingung nicht erfüllt, so wird stattdessen S2) umgesetzt.

Um die Drehzahlen der beiden Antriebswellen und der Ausgangswelle bestimmen zu können, müssen zumindest zwei der Drehzahlen gemessen werden. Die dritte kann dann über die sogenannte Willis-Gleichung ermittelt werden. Die Messung kann über Drehzahlsensoren an geeigneter Stelle oder über Impulsgebern an den Antrieben erfolgen. Beim konstant angetriebenen Hauptantriebsmotor kann mit gewissen Abstrichen an die Genauigkeit auch im Störfall in Näherung angenommen werden, dass die Drehzahl zunächst konstant ist, dann reicht sogar eine Drehzahl-Messung aus.

Die Willis-Gleichung für das Drehzahlgleichgewicht bei geöffneter Kupplung lautet:

$$n1 - ( i\_PG * n2) - ((1 - i\_PG) * (n3 / i\_SG1)) = 0 \qquad (Gl.1)$$

Die Bezeichnung der Drehzahlen und Übersetzungsverhältnisse findet sich in der Bezugzeichenliste zu den Figuren.

Für die Berechnung des Synchronisierungspunktes muss die Bedingung erfüllt sein, dass die Drehzahl (n2) an der Hauptantriebsmaschine vor und nach dem Schließen der Kupplung gleich ist. Während die Willis-Gleichung die Bedingung bei geöffneter Kupplung angibt, gibt die nachfolgende Gleichung die Bedingung bei geschlossener Kupplung an:

$$n2 = n3 / i\_SG2 \qquad (Gl.2a)$$

Beide Gleichungen müssen gleichzeitig erfüllt sein am Synchronisierungspunkt. Ist das gegeben, kann die Kupplung mit minimalem Schlupf geschlossen werden. Durch das Übersetzungsverhältnis i_SG2 ist die Drehzahl des Hilfsantriebes am Synchronisierungspunkt in Abhängigkeit von der Drehzahl der Hauptantriebsmaschine vorgegeben. Durch Einsetzen der Gl.1 in die Gl.2 kann die Bedingung nicht nur für n2 und n3, sondern alternativ auch in Abhängigkeit von den anderen Drehzahlen ausgedrückt werden. Die Auswahl des Übersetzungsverhältnisses i_SG2 wird so gewählt, dass die Drehzahl am Synchronisierungspunkt im Regelbereich der Antriebsvorrichtung liegt.

Bei einer Ausführung mit einer Zusatztriebverbindung, die vom Hilfsantrieb über die erste Getriebestufe auf den Planetenträger und von dort über eine zweite Getriebestufe auf eine Zwischenwelle und von dort über eine dritte Getriebestufe auf das Hohlrad oder auf das Ritzel auf der Eingangswelle wirkt, gilt anstatt der Gleichung (2a) folgende Gleichung für die Bedingung bei geschlossenen Kupplung:

$$n2 = n3 * (i\_SG3 * i\_SG2 / i\_SG1) \qquad (Gl.2b)$$

Nun werden bei Erkennen eines Ausfalls die aktuellen Drehzahlen mit der Drehzahl am Synchronisierungspunkt verglichen. Entfernt sich die Drehzahl des Hilfsantriebes von dessen Synchronisierungsdrehzahl so wird die Kupplung sofort geschlossen und der Hilfsantrieb fest an die Hauptantriebsmaschine gekoppelt. Bewegt sich die Drehzahl des Hilfsantriebes dagegen auf die Synchronisierungsdrehzahl zu so wird das Schließen der Kupplung verzögert. Und zwar solange bis die Drehzahl des Hilfsantriebes nicht mehr als 5%, bevorzugt um nicht mehr als 3% von der zugehörigen Synchronisierungsdrehzahl abweicht. Dadurch wird erreicht, dass die Energieaufnahme und damit die Temperaturentwicklung in der Kupplung möglichst gering ist. Der erste Fall mit sofortigem Schließen der Kupplung ist nur dann nötig, wenn die Drehzahl des Hilfsantriebes die Synchronisierungsdrehzahl schon überschritten hat und ohne Eingriff nicht mehr erreichen kann.

Insbesondere ist es von Vorteil, wenn ein bevorstehender Ausfall oder Schnellabschaltung der Hauptantriebsmaschine (2) bereits vor Eintritt erkannt werden kann. Dazu können beispielsweise Temperaturobergrenzen für die Wicklungstemperatur und/oder für die Lagertemperatur eines oder mehrerer Antriebe durch einen oder mehrere Temperatursensoren überwacht werden.

Weiterhin können zur Erkennung eines Ausfalls oder bevorstehenden Ausfalls zusätzlich aktuelle Beschleunigungswerte aus den gemessenen oder ermittelten Drehzahlen (n1,n2,n3) verwendet werden. So kann beim Auftreten besonderer Gradienten in der Drehzahl ein Ausfall erkannt werden und das erfindungsgemäße Verfahren zur Drehzahllimitierung durchgeführt werden.

Es kann vorteilhaft sein, bei Ausfall oder Fehlfunktion der Hauptantriebsmaschine als weiteren Verfahrensschritt eine Drehzahlvorgabe oder eine Drehmomentvorgabe an die Hilfsantriebe durchzuführen, um sie so in die Nähe der Synchronisierungsdrehzahl zu bringen. Dadurch kann vermieden werden, dass zu viel Energie in der Kupplung aufgenommen werden muss. Somit wird die Temperaturentwicklung in der Kupplung reduziert.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:

**Fig.1**    erfindungsgemäße Antriebsvorrichtung
**Fig.2a**   weitere erfindungsgemäße Antriebsvorrichtung mit positiver Drehzahl der Hilfsantriebe
**Fig.2b**   weitere erfindungsgemäße Antriebsvorrichtung mit negativer Drehzahl der Hilfsantriebe
**Fig.3a**   weitere erfindungsgemäße Antriebsvorrichtung mit weiterer Triebverbindung über Räderkette
**Fig.3b**   weitere erfindungsgemäße Antriebsvorrichtung mit weiterer Triebverbindung über Räderkette als Ausschnitt in Frontansicht
**Fig.4a**   beispielhafter Drehzahlverlauf ohne Schließen der Kupplung
**Fig.4b**   weiterer beispielhafter Drehzahlverlauf ohne Schließen der Kupplung
**Fig.5**    beispielhafter Drehzahlverlauf mit sofortigem Schließen der Kupplung
**Fig.6**    beispielhafter Drehzahlverlauf mit verzögertem Schließen der Kupplung

Nachfolgend werden die Figuren detaillierter beschrieben. Gleiche Bezugszahlen bezeichnen gleiche beziehungsweise analoge Bauteile oder Komponenten.

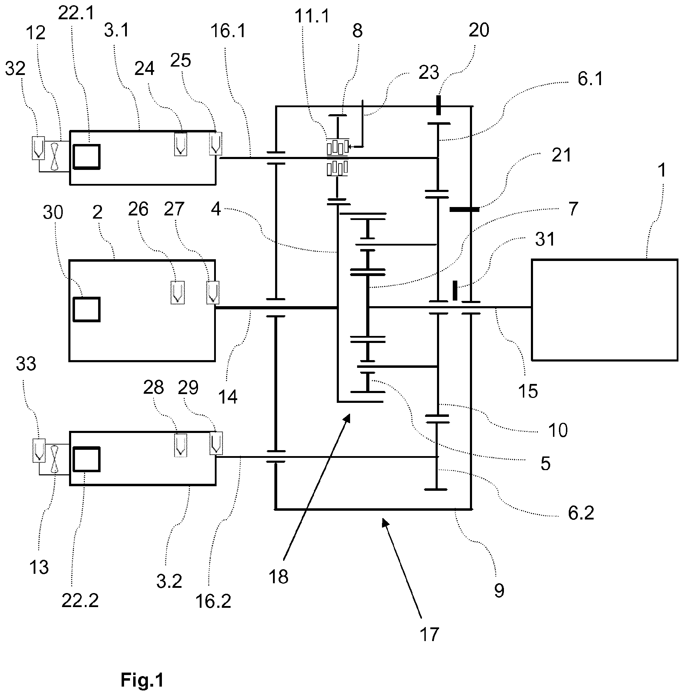

In **Fig.1** ist eine erfindungsgemäße Antriebsvorrichtung gezeigt, die über die Ausgangswelle 15 an die Arbeitsmaschine 1 angebunden ist. Und an einer solchen Vorrichtung kann das erfindungsgemäße Verfahren zur Drehzahllimitierung vorteilhaft eingesetzt werden. Das Überlagerungsgetriebe 17 weist ein Gehäuse 9 auf und umfasst ein Planetengetriebe 18 mit der Übersetzung i_PG. Die Eingangswelle 14 verbindet die Hauptantriebsmaschine 2 mit dem Hohlrad 4 des Planetengetriebes und die Ausgangswelle 15 verbindet das Sonnenrad 7 mit der Arbeitsmaschine 1. Die dritte Welle des Überlagerungsgetriebes wird durch die Hilfsantriebswellen 16.1 und 16.2 gebildet. Diese verbinden über die erste Getriebestufe 6.1, 6.2 die Hilfsantriebe 3.1 und 3.2 mit dem Planetenträger 10. Der Planetenträger 10 trägt zum einen die Planetenräder 5 über die Planetenbolzen und auf der anderen Seite ist er als Zahnrad ausgebildet, das mit den jeweiligen Zahnrädern auf den Hilfsantriebswellen 16.1 und 16.2 die erste Getriebestufe 6 bildet. Das Zahnrad auf den Planetenträger kann auch gefügt sein, es muss nicht unbedingt einteilig aus dem Planetenträger gebildet sein. Im dieser Figur ist die bevorzugte Variante für die Getriebestufe nämlich in Form einer Stirnradstufe dargestellt. Weiterhin ist diese Ausführung mit zwei Hilfsantrieben 3.1 und 3.2 ausgestattet; die Erfindung kann aber auch mit nur einem Hilfsantrieb oder mit mehreren, zum Beispiel drei Hilfsantrieben umgesetzt werden. Wichtig ist, dass die Hilfsantriebe über eine Getriebestufe 6.1,6.2 mit gleicher Übersetzung mit dem Planetenträger 10 gekoppelt sind.

Die Hilfsantriebe 3.1, 3.2 sind als regelbare Motoren mit kleinerer Leistung und die Hauptantriebsmaschine 2 als Motor mit höherer Leistung aber konstanter Drehzahl ausgeführt. Bevorzugt können die Hilfsantriebe als Niederspannungsmotoren ausgeführt werden, da sie oft nur ca. 10 bis 30% der gesamten Antriebsleistung haben. Somit fallen auch die notwendigen Frequenzumformer und die sonstigen Komponenten zur Regelung kleiner und günstiger aus. Die Hauptantriebsmaschine 2 ist bei vielen Anwendungen als Mittelspannungsmotor ausgeführt, um insgesamt die benötigte Leistung zu liefern, und kann ohne Regelung ausgeführt werden. Solche Antriebsvorrichtungen sind besonders interessant bei hohen Leistungen von mehreren MW, wie sie bei schnelllaufenden Pumpen, Kompressoren oder Ventilatoren in der Öl- und Gasindustrie oder in thermischen Kraftwerken vorkommen. Über die Drehzahl und Drehrichtung der Hilfsantriebe 3.1, 3.2 kann die Drehzahl an der Ausgangswelle 15 um einen gewissen Anteil erhöht oder erniedrigt werden. Die Grenzen dieses Bereiches bei maximaler Drehzahl der Hilfsantriebe 3.1, 3.2 einmal in positiver und einmal in negativer Drehrichtung geben den möglichen Regelbereich vor. Die Übersetzung i_SG1 der ersten Getriebestufe 6.1, 6.2 muss an die Nenndrehzahlverhältnisse und Drehmomentverhältnisse zwischen Hilfsantrieb und Hauptantrieb angepasst werden.

Über eine zweite Getriebestufe 8, die hier wiederum als Stirnradstufe von einem weiteren Zahnrad auf der Hilfsantriebswelle 16.1 und der Außenverzahnung auf dem Hohlrad 4 gebildet wird, können die Hilfsantriebe 3.1, 3.2 unter Umgehung des Planetengetriebes 18 direkt mit der Eingangswelle 14 und der Hauptantriebsmaschine 2 gekoppelt werden. Dieser Leistungspfad stellt die Zusatztriebverbindung dar, die zusätzlich zur Verbindung wirkt, die zwischen den Hilfsantrieben 3.1, 3.2 und dem Planetenträger 10 besteht. Diese Zusatztriebverbindung kann über die schaltbare Kupplung 11.1 mit dem Aktuator 23 geöffnet oder geschlossen werden. Die Übersetzung i_SG2 der zweiten Getriebestufe muss so ausgelegt sein, dass die Drehzahl im Synchronisierungspunkt im Regelbereich liegt. Auch bei geöffneter Kupplung bleibt die Verbindung zwischen Hilfsantrieb 3.1, 3.2 und Planetenträger 10 über die erste Getriebestufe 6.1, 6.2 aktiviert.

Fällt nun einer der Antriebe 2, 3.1, 3.2 aufgrund einer Störung aus oder wird eine Schnellabschaltung, insbesondere des Hauptantriebes 2, eingeleitet, so fällt die Drehzahl n1 an der Arbeitsmaschine schnell ab, da deren Massenträgheit in diesen Anwendungen sehr viel kleiner ist, als die der Antriebsmotoren 2, 3.1, 3.2. Da die Massenträgheit der Hilfsantriebe 3.1, 3.2 auch noch kleiner ist als die der Hauptantriebsmaschine 2, werden der Planetenträger 10 und die Hilfsantriebe 3.1, 3.2 im Störungsfall durch das schnelle Auslaufen der Arbeitsmaschine 1 und das langsame Auslaufen der Hauptantriebsmaschine 2 beschleunigt. Wird dabei eine unzulässig hohe Drehzahl erreicht, können die Hilfsantriebe 3.1, 3.2 und besonders die Planetenräder 5 und deren Bolzen beschädigt werden. Eine sichere Auslegung des Planetengetriebes 18 auf diesen besonderen Störfall oder eine zusätzlich vorgesehene Bremse würden die Antriebsvorrichtung unnötig groß und teuer machen.

Durch das Schließen der Kupplung 11.1 nach dem Erkennen eines entsprechenden Störfalls kann im erfindungsgemäßen System diese Überdrehzahl verhindert werden. Informationen zum Erkennen eines Störfalls können beispielsweise aus dem Steuerungssystem oder dem System der Energieversorgung kommen. Zusätzlich können Temperatursensoren zur Lagerüberwachung 25,27,29 oder zur Überwachung der Wicklungstemperatur 24,26,28 an den Antriebsmotoren vorhanden sein, deren Signal zur Erkennung einer Störung oder einer sich abzeichnenden Störung verwendet werden. An den Hilfsantrieben sind Fremdkühler vorgesehen, die hier als Fremdlüfter 12,13 mit eigenem Lüftermotor und mit Überwachungssensoren für die Wicklungstemperatur 32,33 ausgeführt sind. Die Ausführung mit Fremdkühler hat den Vorteil, dass auch bei geringer Drehzahl des Hilfsantriebes eine höhere Kühlleistung möglich ist, die unabhängig von der Drehzahl des Hilfsantriebes geregelt werden kann. Das ist nötig falls ein höheres Drehmoment bei niedriger Drehzahl gefordert wird, was nicht nur im normalen Betrieb, sondern auch nach Schließen der Kupplung 11.1 im hier beschriebenen Verfahren zur Drehzahllimitierung vorkommen kann.

Bevorzugt wird die Kupplung 11.1 und ihre Ansteuerung so ausgeführt, dass die Kupplung bei Ausfall der Ansteuerung geschlossen ist. Dadurch wird gewährleistet, dass selbst bei komplettem Stromausfall und Ausfall der Steuerung dennoch die Drehzahllimitierung über die geschlossene Kupplung erreicht wird.

Des Weiteren können Drehzahlsensoren 22.1, 22.2, 30 an den Antrieben vorgesehen sein. Diese können durch die Impulsgeber der Motoren gebildet werden. Alternativ oder zusätzlich kann ein Drehzahlsensor 20 am Zahnrad der ersten Getriebestufe 6.1 ,6.2, ein Drehzahlsensor 21 am Zahnrad des Planetenträgers 10 und ein Drehzahlsensor 31 an der Ausgangswelle 15 vorhanden sein. Somit sind Varianten angegeben, mit denen alle Drehzahlen n1, n2, n3 und die des Planetenträgers gemessen werden können. Letztendlich ist es allerdings ausreichend, wenn zwei dieser Drehzahlen gemessen werden, denn die übrigen Drehzahlen können dann über die Drehzahlgleichung des Planetengetriebes 18 und über die Übersetzungen bestimmt werden. Es sind somit nicht alle gezeigten Drehzahlsensoren gleichzeitig nötig.

Die Bestimmung der Drehzahlen und insbesondere die Kenntnis deren Verläufe im Störfall bieten den Vorteil, dass damit bestimmt werden kann, wann der beste Schaltzeitpunkt für die Kupplung 11.1 ist. Durch ein verzögertes Schließen nach dem Erkennen eines Störfalls und einen optimierten Schaltzeitpunkt kann die Belastung und die Temperaturerhöhung in der Kupplung 11.1 beim Herunterfahren des Systems deutlich reduziert werden.

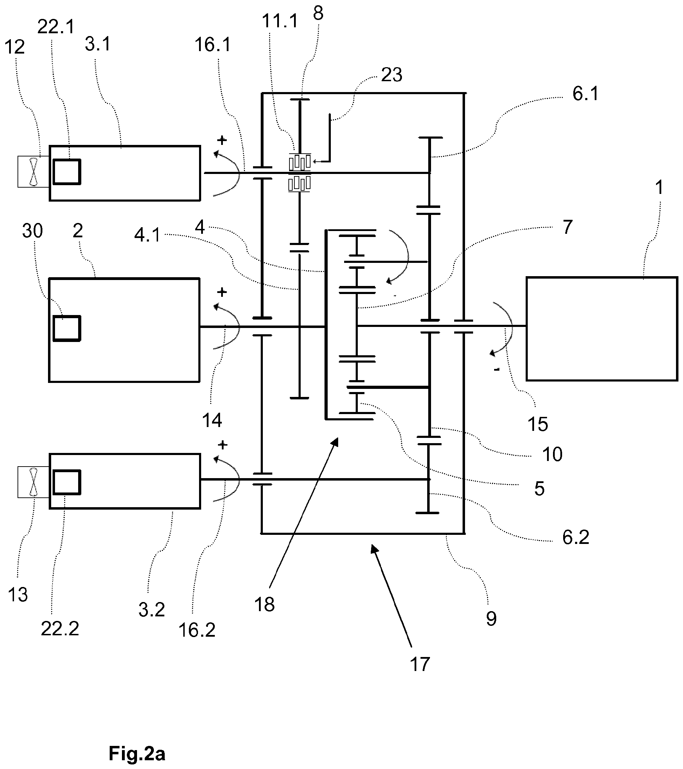

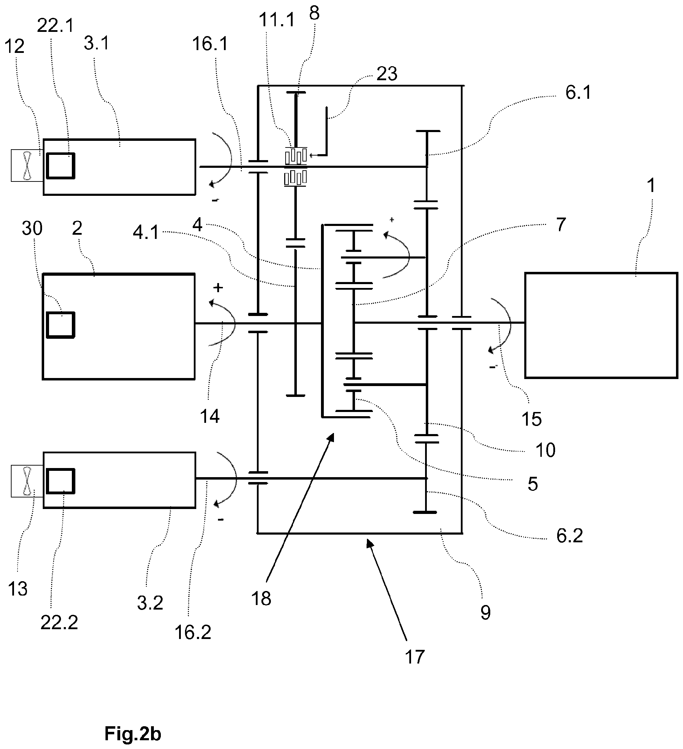

**Fig.2a und 2b** stellen eine weitere Ausführung für eine erfindungsgemäße Vorrichtung dar. Der wesentliche Unterschied zur Ausführung in Fig.1 ist, dass die zweite Getriebestufe 8 nicht mit einer Außenverzahnung auf dem Hohlrad 4 gebildet wird, sondern dass stattdessen ein Ritzel 4.1 auf der Eingangswelle 14 sitzt, das mit dem zweiten Zahnrad auf der Hilfsantriebswelle 16.1 im Eingriff ist. Die schaltbare Kupplung 11.1 ist wiederum zwischen diesem zweiten Zahnrad und der Hilfsantriebswelle 16.1 dargestellt. Alternativ könnte die Kupplung allerdings auch zwischen dem Ritzel 4.1 und er Eingangswelle 14 vorgesehen werden.

Auch in dieser Ausführung können die bei Fig.1 genannten Sensoren vorteilhafterweise eingesetzt werden.

Über die Pfeile an den Wellen wird die Drehrichtung (+/-) angezeigt. In beiden Fällen wird angenommen, dass die Kupplung 11.1 geöffnet ist. Die Drehrichtung der Ausgangswelle 15 ist immer gegenläufig zur Drehrichtung der Eingangswelle 14. **Fig.2a** beschreibt den Betrieb oberhalb des Umkehrpunktes, das heißt die Hilfsantriebe erhöhen in diesem Fall die Drehzahl an der Ausgangswelle 15 gegenüber der Drehzahl, die sich bei Nenndrehzahl der Hauptantriebsmaschine 2 einstellen würde, wenn der Planetenträger 10 und die Hilfsantriebe stehen (= Umkehrpunkt). Und **Fig.2b** zeigt den Fall, dass die Drehzahl der Arbeitsmaschine 1 unter dem Umkehrpunkt liegt, also dass die Hilfsantriebe durch die Überlagerung die Drehzahl reduzieren.

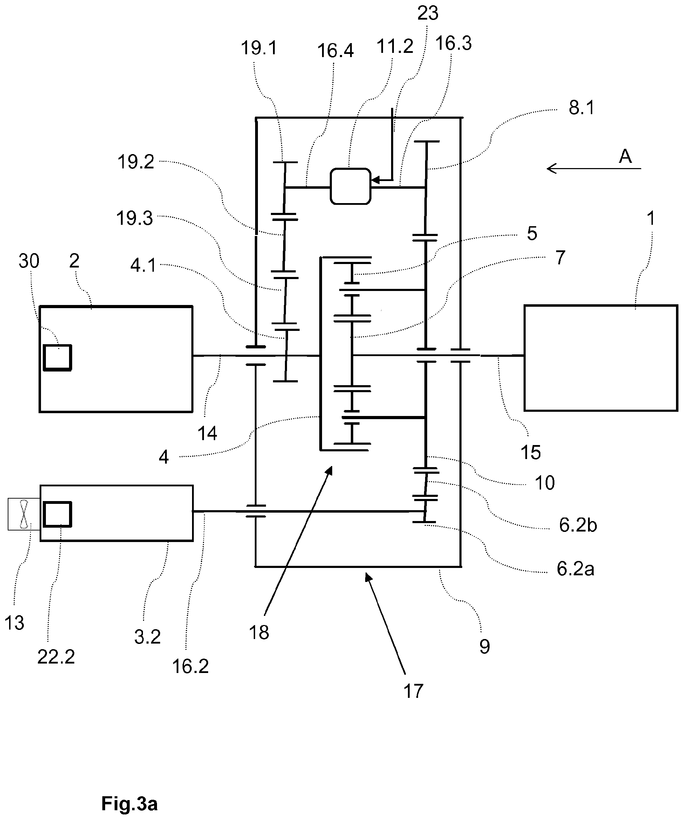

In **Fig.3a** ist eine weitere bevorzugte Ausführung der erfinderischen Antriebsanordnung dargestellt. Der Einfachheit halber ist nur ein Hilfsantrieb 3.2 gezeigt, bevorzugt sind aber zwei oder sogar drei Hilfsantriebe analog vorhanden. Desweiteren ist der Hilfsantrieb 3.2 schematisch unter der Hauptantriebsmaschine 2 gezeichnet, auch wenn er bei zwei Hilfsantrieben bevorzugt auf der gleichen Ebene mit der Hauptantriebsmaschine 2 liegen kann. Vom Hilfsantrieb 3.2 wird über die erste Getriebestufe, die als Räderkette 6.2a, 6.2b ausgebildet ist, Drehmoment auf den Planetenträger 10 übertragen. Die Zusatztriebverbindung nutzt ebenfalls diese erste Getriebestufe und überträgt dann das Drehmoment weiter über die zweite Getriebestufe 8.1 auf den ersten Teil der Zwischenwelle 16.3. Über die schaltbare Kupplung 11.2 wird die erste Zwischenwelle 16.3 mit der zweiten Zwischenwelle 16.4 verbunden. Und von der Zwischenwelle 16.4 wird das Drehmoment dann über die dritte Getriebestufe, die hier als Räderkette 19.1, 19.2, 19.3 ausgeführt ist, auf das Ritzel 4.1 auf der Eingangswelle 14 übertragen. So wird bei geschlossener Kupplung 11.2 der Hilfsantrieb 3.2 durch die Zusatztriebverbindung über erste, zweite und dritte Getriebestufe mit der Eingangswelle 14 verbunden. Bei geöffneter Kupplung 11.2 wirkt der Hilfsantrieb über die erste Getriebestufe nur auf den Planetenträger. Die Kupplung 11.2 wird über den Aktuator 23 betätigt. Für die Berechnung des Synchronisierungspunktes gilt die Gleichung (2b).

Anstelle einer oder beider gezeigter Räderketten kann auch jeweils eine Stirnradstufe mit größeren Zahnrädern verwendet werden. Oder es kann eine der anderen genannten Varianten für die Drehmomentübertragung eingesetzt werden. Gut zu erkennen ist der Vorteil, dass die Ausführung im Bereich der Hilfsantriebe 3.2 mit der Hilfsantriebswelle 16.2 sehr kompakt und platzsparend in der Breite sein kann. Das ermöglicht beispielsweise, dass die erfindungsgemäße Antriebsanordnung in Anwendungen bauraumneutral gegenüber bisherigen Antriebssystemen eingesetzt werden kann.

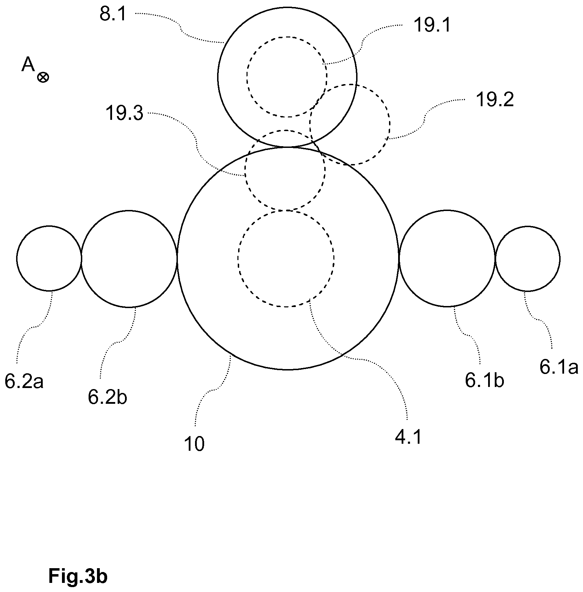

Fig.3b zeigt einen Ausschnitt der Ausführungsform aus Fig.3a in Frontansicht aus Blickrichtung A, wobei nur die Zahnräder gezeigt werden. Wellen und Antriebe sind nicht dargestellt. Gezeigt ist eine Version mit zwei Hilfsantrieben. Über die Räderketten 6.1a, 6.1b und 6.2a, 6.2b, die die erste Getriebestufe darstellen, wird Drehmoment von der jeweiligen Hilfsantriebswelle auf den Planetenträger 10 übertragen. Die zweite Getriebestufe 8.1 steht mit dem Planetenträger 10 im Eingriff und überträgt das Drehmoment auf die Zwischenwelle. Von dort wird bei geschlossener Kupplung das Drehmoment über die dritte Getriebestufe, die wiederum als Räderkette 19.1, 19.2, 19.3 ausgebildet ist, auf das Ritzel 4.1 auf der Eingangswelle übertragen. In dieser Darstellung ist zu erkennen, dass das Getriebegehäuse gut horizontal geteilt ausgeführt werden kann, da alle Wellen die das Gehäuse durchdringen müssen auf einer Höhe liegen können. Die Lagersitze der Hilfsantriebswellen, der Eingangswelle und der Ausgangswelle werden durch die Teilfuge entsprechend auf einer Höhe geteilt.

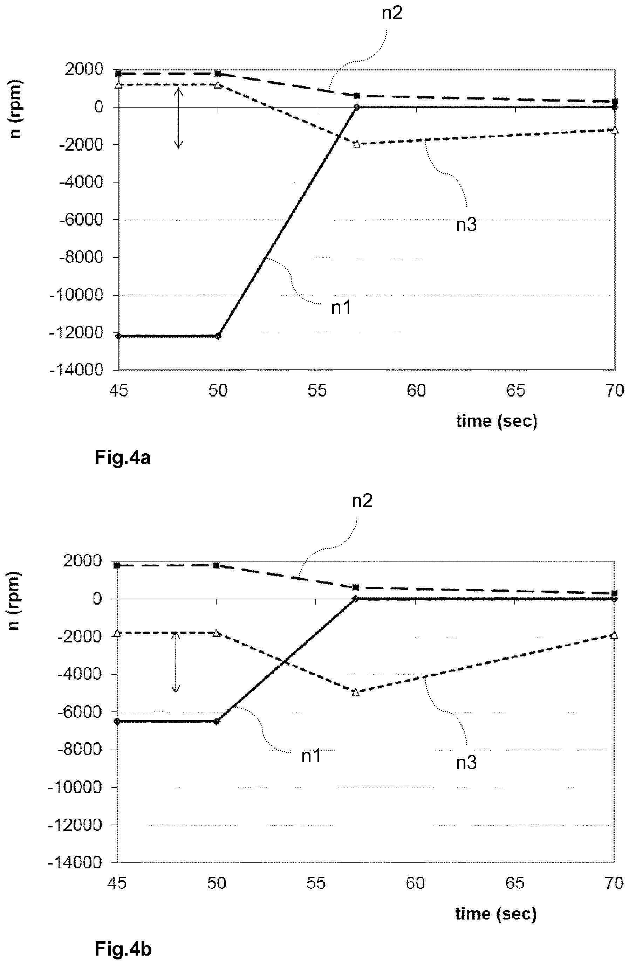

Die Drehzahlverläufe in Fig.4a und 4b zeigen schematisch für eine erfindungsgemäße Antriebsvorrichtung, was passieren würde, wenn die Hauptantriebsmaschine 2 ausfällt (Zeitpunkt 50 sec), ohne dass die Kupplung 11.1, 11.2 geschlossen wird. Die Zahlenwerte sind nur Beispiele zur Veranschaulichung unter Annahme einer bestimmten Auslegung der Antriebsvorrichtung. Sie können selbstverständlich variieren, je nachdem wie die Antriebe 2, 3.1, 3.2, die Arbeitsmaschine1 und die Übersetzungen im Getriebe 17,18 ausgelegt sind.

Fig.4a stellt den Fall dar, dass die Hilfsantriebe vor Eintritt des Störfalls mit positiver Drehrichtung und die Arbeitsmaschine 1 mit maximaler Drehzahl betrieben wurden. Durch das schnelle Abfallen der Drehzahl n1 der Arbeitsmaschine aufgrund ihrer geringen Massenträgheit und durch das geringe Abfallen der Drehzahl n2 der Hauptantriebsmaschine 2 aufgrund ihrer sehr hohen Massenträgheit werden die Hilfsantriebe 3.1, 3.2 zunächst umbeschleunigt in die negative Drehrichtung und dann zu hohen Drehzahlen hin weiter beschleunigt. Dabei besteht die Gefahr, dass Hilfsantrieb 3.1, 3.2 oder Planetenträger 10 durch unzulässige Überdrehzahl beschädigt werden.

Fig.4b stellt den entgegengesetzten Fall dar, bei dem die Hilfsantriebe 3.1, 3.2 mit negativer Drehzahl betrieben werden. Die Arbeitsmaschine 1 läuft dabei mit reduzierter Drehzahl n1. Im Störfall (wieder Zeitpunkt 50 sec) werden sie dann zu noch höheren negativen Drehzahlen beschleunigt. Wieder mit dem Risiko, dass Schäden durch Überdrehzahl auftreten.

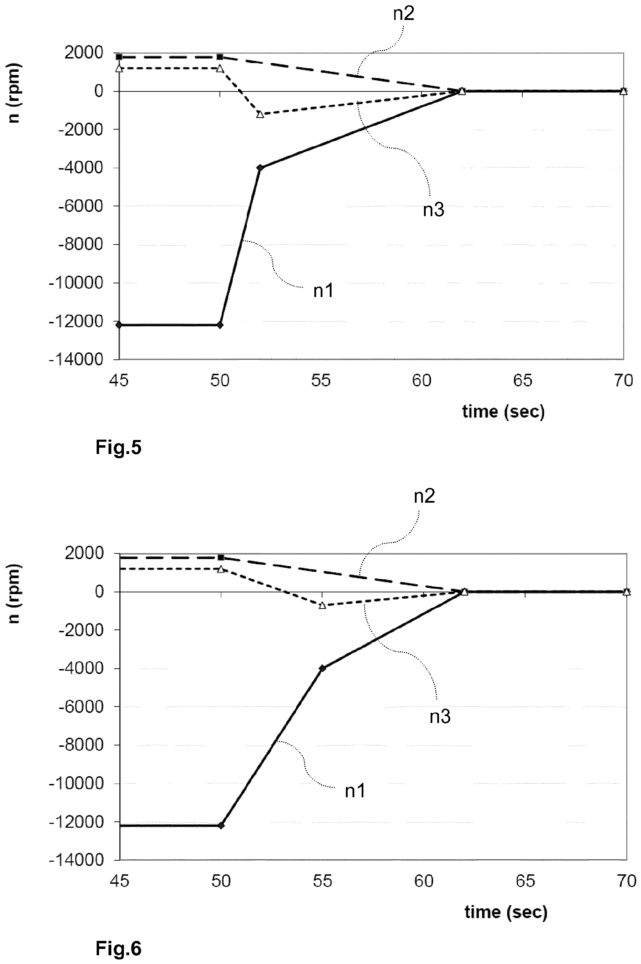

An einer erfindungsgemäßen Vorrichtung kann nun mithilfe der schaltbaren Kupplung 11.1, 11.2 in einem geeigneten Verfahren verhindert werden, dass unzulässige Überdrehzahlen am Hilfsantrieb 3.1, 3.2 oder am Planetenträger 10 auftreten. Fig.5 zeigt beispielhaft die Drehzahlverläufe für den Fall, dass die Kupplung 11 sofort nach Erkennen des Störfalls (Zeitpunkt 50 sec) geschlossen wird. Die ca. 2 sec Verzögerung bis zum Knickpunkt ergeben sich durch den zunächst auftretenden Schlupf in der Kupplung 11.1, 11.2, solange bis die Hilfsantriebe 3.1, 3.2 umbeschleunigt sind. Nach dem Knickpunkt ist zu erkennen, wie die nun durch die Getriebestufe 8,8.1,19.1,19.2,19.3 gekoppelten Drehzahlen n2 und n3 gleichartig bis auf Null abnehmen. Beim sofortigen Schließen der Kupplung 11.1, 11.2 muss die gesamte Energie in der Kupplung 11.1, 11.2 aufgenommen werden, was zu einer entsprechenden Temperaturerhöhung führt.

Um das Umbeschleunigen der Hilfsantriebe zu unterstützen, können diese nach Erkennen des Störfalls mit Drehmoment- oder Drehzahlvorgaben angesteuert werden. Das ist allerdings nur möglich, wenn ausschließlich die Hauptantriebsmaschine ausgefallen ist oder schnell-abgeschaltet wird.

Fig.6 zeigt die Drehzahlverläufe für ein weiter optimiertes Verfahren zur Drehzahllimitierung im Störfall, bei dem die Kupplung 11.1, 11.2 erst verzögert und synchronisiert geschlossen wird. Dadurch kann die notwendige Energieaufnahme und die Temperaturerhöhung in der Kupplung 11.1, 11.2 begrenzt werden. Dazu wird die Synchronisierungsdrehzahl mit Gl.2 und Gl.1 berechnet. Des Weiteren werden die Drehzahlen n1, n2 und n3 gemessen oder bestimmt. Wenn zwei davon gemessen werden, kann die dritte über das Drehzahlgleichgewicht (Willis-Gleichung) bestimmt werden. Nun kann der Drehzahlverlauf mit der Drehzahl am Synchronisierungspunkt verglichen werden.

Bewegt sich die Drehzahl n3 des Hilfsantriebes auf die Synchronisierungsdrehzahl zu, so wird das Schließen der Kupplung 11.1,11.2 solange verzögert, bis die Drehzahl n3 in deren Nähe gekommen ist. Beispielsweise solange bis sie maximal 5%, bevorzugt maximal 3% von dieser abweicht. Durch die kleinere Drehzahldifferenz beim Schließen kann die dabei entstehende Temperaturerhöhung begrenzt werden. Im gezeigten Beispiel wurde das Schließen so verzögert, dass erst zum Zeitpunkt 55 sec eine volle Drehmomentübertragung in der Kupplung 11 erfolgt.

Bewegt sich die Drehzahl n3 des Hilfsantriebes allerdings bei Erkennen des Störfalls von der Synchronisierungsdrehzahl weg, wird die Kupplung 11.1, 11.2 dennoch sofort geschlossen, um ein weiteres Anwachsen der Differenz zu vermeiden.

Selbstverständlich können die Drehzahlbedingungen zum Schließen der Kupplung 11.1, 11.2 auch für die anderen Drehzahlen formuliert werden. Zur Umrechnung wird die Gl.1 verwendet.

## Bezugszeichenliste

| | |
|---|---|
| 1 | Arbeitsmaschine |
| 2 | Hauptantrieb |
| 3.1, 3.2 | Hilfsantrieb |
| 4 | Hohlrad |
| 4.1 | Ritzel |
| 5 | Planetenräder |
| 6.1,6.1a,6.1b, 6.2,6.2a,6.2b | erste Getriebestufe |
| 7 | Sonnenrad |
| 8, 8.1 | zweite Getriebestufe |
| 9 | Gehäuse |
| 10 | Planetenträger |
| 11.1, 11.2 | schaltbare Kupplung |
| 12, 13 | Fremdkühlung |
| 14 | Eingangswelle |
| 15 | Ausgangswelle |
| 16.1, 16.2 | Hilfsantriebswellen |
| 16.3, 16.4 | Zwischenwelle |
| 17 | Überlagerungsgetriebe |
| 18 | Planetengetriebe |
| 19.1,19.2,19.3 | dritte Getriebestufe |
| 20, 21, 22.1, 22.2, 30, 31 | Drehzahlsensoren |
| 23 | Aktuator für Kupplung |
| 24, 26, 28, 32, 33 | Wicklungstemperatursensoren |
| 25, 27, 29 | Lagertemperatursensoren |
| n1 | Drehzahl Ausgangswelle = Sonnenrad |
| n2 | Drehzahl Hauptantrieb = Hohlrad |
| n3 | Drehzahl Hilfsantriebe |

| | |
|---|---|
| i_PG | Übersetzung Planetengetriebe (= n1 / n2) |
| i_SG1 | Übersetzung erste Getriebestufe (6.x) (= n3 / n-Planetenträger) |
| i_ SG2 | Übersetzung zweite Getriebestufe (8.x) (= n2 / n3 oder = n-Zwischenwelle / n-Planetenträger) |
| i_SG3 | Übersetzung dritte Getriebestufe (19.x) (= n-Zwischenwelle / n2) |

## Patentansprüche

1. Antriebsvorrichtung umfassend ein Überlagerungsgetriebe (17), eine Hauptantriebsmaschine (2), die mit einer Eingangswelle (14) des Überlagerungsgetriebes verbunden ist, einen oder mehrere Hilfsantriebe (3.1,3.2) und eine Ausgangswelle (15) des Überlagerungsgetriebes, die mit einer Arbeitsmaschine (1) verbunden werden kann, wobei das Überlagerungsgetriebe (17) ein Planetengetriebe (18) aufweist mit einem Hohlrad (4), einem Sonnenrad (7), einem Planetenträger (10) und mehreren Planetenrädern (5), wobei die Eingangswelle (14) mit dem Hohlrad (4), die Ausgangswelle (15) mit dem Sonnenrad (7) und der oder die Hilfsantriebe (3.1,3.2) über eine erste Getriebestufe (6.1,6.1a,6.1b,6.2,6.2a,6.2b) mit konstanter Übersetzung (i_SG1) mit dem Planetenträger (10) verbunden ist, **dadurch gekennzeichnet,** **dass** eine Zusatztriebverbindung mit konstanter Übersetzung (i_SG1, i_SG2, iSG3) zwischen dem Hilfsantrieb (3.1,3.2) auf der einen Seite und dem Hohlrad (4) oder einem Ritzel (4.1) auf der Eingangswelle auf der anderen Seite vorhanden ist, wobei in dieser Zusatztriebverbindung eine schaltbare Kupplung (11.1,11.2) vorhanden ist, die die Zusatztriebverbindung aktivieren oder unterbrechen kann, derart dass bei Unterbrechung durch die Kupplung (11.1,11.2) die Verbindung zwischen Hilfsantrieb (3.1,3.2) und Planetenträger (10) über die erste Getriebestufe (6.1,6.1a,6.1b,6.2,6.2a,6.2b) aktiviert bleibt, und dass der oder die Hilfsantriebe (3.1,3.2) je einen Fremdkühler aufweisen, der als Fremdlüfter (12,13) mit separatem Lüftermotor ausgeführt ist oder dass der oder die Hilfsantriebe (3.1,3.2) je einen Fremdkühler aufweisen, der als Wasserkühler ausgeführt ist.

**2.** Vorrichtung nach Anspruch 1
**dadurch gekennzeichnet,**
**dass** die Hauptantriebsmaschine (2) nur drehzahlkonstant betreibbar ist und der oder die Hilfsantriebe (3.1,3.2) drehzahlgeregelt betreibbar sind und insbesondere der oder die Hilfsantriebe (3.1,3.2) als Niederspannungsmotoren ausgeführt sind.

**3.** Vorrichtung nach Anspruch 1 oder 2
**dadurch gekennzeichnet,**
**dass** der oder die Hilfsantriebe (3.1,3.2) je einen Fremdkühler aufweisen, der als Fremdlüfter (12,13) mit separatem Lüftermotor ausgeführt ist und mindestens einen Sensor (32,33) zur Überwachung der Wicklungstemperatur am separaten Lüftermotor aufweist.

**4.** Vorrichtung nach Anspruch 1 oder 2
**dadurch gekennzeichnet,**
**dass** der oder die Hilfsantriebe (3.1,3.2) je einen Fremdkühler aufweisen, der als Wasserkühler ausgeführt ist und einen Sensor zur Überwachung der Kühlwassertemperatur im Kühlerrücklauf und/oder einen Sensor zur Überwachung der Kühlwasserpumpe aufweist.

**5.** Vorrichtung nach einem der vorherigen Ansprüche
**dadurch gekennzeichnet,**
**dass** die Zusatztriebverbindung von einer Hilfsantriebswelle (16.1,16.2) über eine zweite Getriebestufe (8) direkt auf das Hohlrad (4) oder das Ritzel (4.1) einwirkt.

**6.** Vorrichtung nach einem der Ansprüche 1 bis 4
**dadurch gekennzeichnet,**
**dass** die Zusatztriebverbindung von einer Hilfsantriebswelle (16.1,16.2) über eine erste Getriebestufe (6.1,6.1a,6.1b,6.2,6.2a,6.2b) auf den Plantenträger (10), über eine zweite Getriebestufe (8.1) auf eine Zwischenwelle (16.3) und über eine dritte Getriebestufe (19.1,19.2,19.3) auf das Hohlrad (4) oder das Ritzel (4.1) einwirkt, wobei die erste Getriebestufe (6.1a,6.1b,6.2a,6.2b) und/oder die dritte Getriebestufe (19.1,19.2,19.3) bevorzugt als Räderkette aus je mindestens zwei Zahnrädern aufgebaut ist.

**7.** Vorrichtung nach Anspruch 6
**dadurch gekennzeichnet,**
**dass** die Kupplung (11.2) zwischen der zweiten Getriebestufe (8) und der dritten Getriebestufe (19.1,19.2,19.3) angeordnet ist.

**8.** Vorrichtung nach einem der vorherigen Ansprüche
**dadurch gekennzeichnet,**
**dass** die Kupplung (11.1,11.2) so ausgeführt ist, dass sie im nicht angesteuerten Zustand, insbesondere bei Energieausfall, in den geschlossenen Zustand übergeht und dass die Kupplung (11.1,11.2) bevorzugt als Lamellenkupplung oder Klauenkupplung oder Visco-Kupplung oder hydrodynamischen Kupplung ausgeführt ist.

**9.** Vorrichtung nach einem der vorherigen Ansprüche
**dadurch gekennzeichnet,**
**dass** diese so ausgeführt ist, dass von den drei Drehzahlen (n1,n2,n3): Hauptantriebsmaschine (2), Ausgangswelle (15) und Hilfsantrieb (3.1,3.2) zumindest zwei Drehzahlen erfasst oder gemessen werden können, insbesondere mit Hilfe von Impulsgeber (22.1,22.2,30) am Antrieb und/oder Drehzahlsensor (20,21,31).

**10.** Vorrichtung nach einem der vorherigen Ansprüche
**dadurch gekennzeichnet,**

**dass** der oder die Hilfsantriebe (3.1,3.2) und/oder die Hauptantriebsmaschine (2) einen Sensor (24,28,26) zur Erfassung der Wicklungstemperatur und/oder einen Sensor (25,29,27) zur Erfassung der Lagertemperatur aufweisen.

**11.** Verfahren zur Drehzahllimitierung an einer Antriebsanordnung gemäß einem der vorherigen Ansprüche bei Ausfall oder Schnellabschaltung der Hauptantriebsmaschine (2) oder eines Hilfsantriebes (3.1,3.2), wobei folgende Verfahrensschritte ausgeführt werden:

A) Erkennen eines Ausfalls oder einer Schnellabschaltung der Hauptantriebsmaschine (2) oder eines Hilfsantriebes (3.1,3.2);
S) und danach Schließen der Kupplung (11).

**12.** Verfahren nach Anspruch 11,
**dadurch gekennzeichnet,**
**dass** zusätzlich folgende Schritte ausgeführt werden:

B) Wiederholtes Ermitteln oder Messen der Drehzahlen an einem der Hilfsantriebe (3.1,3.2) oder dem Planetenträger (10), an der Eingangswelle (14) oder der Hauptantriebsmaschine (2) und an der Ausgangswelle (15) oder der Arbeitsmaschine (1);
C) Berechnen der Synchronisierungspunktes aus der Bedingung: Drehzahl (n2) der Hauptantriebsmaschine ist vor dem Schließen der Kupplung (11) gleich der Drehzahl (n2) nach dem Schließen der Kupplung (11);
S1) Sofortiges Schließen der Kupplung (11) nur, falls sich die Drehzahl (n3) des Hilfsantriebes von der Synchronisierungsdrehzahl (n_syn) entfernt,
S2) ansonsten verzögertes Schließen der Kupplung (11), und zwar dann wenn Drehzahl (n3) des Hilfsantriebes maximal um 5%, bevorzugt maximal um 3% von der Synchronisierungsdrehzahl (n_syn) abweicht.

**13.** Verfahren nach Anspruch 11 oder 12,
**dadurch gekennzeichnet,**
**dass** ein bevorstehender Ausfall oder Schnellabschaltung der Hauptantriebsmaschine (2) bereits vor Eintritt erkannt werden, indem Temperaturobergrenzen für die Wicklungstemperatur und/oder für die Lagertemperatur der Antriebe durch einen oder mehrere Temperatursensoren (24,26,28 und/oder 25,27,29) überwacht werden.

**14.** Verfahren nach einem der Ansprüche 11 bis 13,
**dadurch gekennzeichnet,**
**dass** zur Erkennung eines Ausfalls oder bevorstehenden Ausfalls zusätzlich aktuelle Beschleunigungswerte aus den gemessenen oder ermittelten Drehzahlen (n1 ,n2,n3) verwendet werden.

**15.** Verfahren nach einem der Ansprüche 11 bis 14,
**dadurch gekennzeichnet,**
**dass** bei Ausfall oder Fehlfunktion der Hauptantriebsmaschine (2) als weiterer Verfahrensschritt eine Drehzahlvorgabe oder eine Drehmomentvorgabe an die Hilfsantriebe (3.1,3.2) erfolgt, um sie in die Nähe der Synchronisierungsdrehzahl zu bringen.

**Claims**

**1.** Drive device comprising a superposition transmission (17), a main drive machine (2) which is connected to an input shaft (14) of the superposition transmission, one or more auxiliary drives (3.1, 3.2) and an output shaft (15) of the superposition transmission, which output shaft can be connected to a work machine (1), wherein the superposition transmission (17) has a planetary transmission (18) with an internal gear (4), a sun gear (7), a planet carrier (10) and multiple planet gears (5), wherein the input shaft (14) is connected to the internal gear (4), the output shaft (15) is connected to the sun gear (7), and the one or more auxiliary drives (3.1, 3.2) are connected by means of a first transmission stage (6.1, 6.1a, 6.1b, 6.2, 6.2a, 6.2b) with constant transmission ratio (i_SG1) to the planet carrier (10),
**characterized**
**in that** an auxiliary drive connection with constant transmission ratio (i_SG1, i_SG2, i_SG3) is provided between the auxiliary drive (3.1, 3.2) at one side and the internal gear (4) or a pinion (4.1) on the input shaft on the other side, wherein, in this auxiliary drive connection, there is provided a switchable clutch (11.1, 11.2) which can activate or interrupt the auxiliary drive connection, in such a way that, in the event of interruption by means of the clutch (11.1, 11.2), the connection between auxiliary drive (3.1, 3.2) and planet carrier (10) remains activated via the first transmission stage (6.1, 6.1a, 6.1b, 6.2, 6.2a, 6.2b), and

**in that** the one or more auxiliary drives (3.1, 3.2) have in each case one external cooler which is designed as an external fan (12, 13) with separate fan motor, or in that the one or more auxiliary drives (3.1, 3.2) have in each case one external cooler which is designed as a water-type cooler.

2. Device according to Claim 1,
   **characterized**
   **in that** the main drive machine (2) is operable only at a constant rotational speed, and the one or more auxiliary drives (3.1, 3.2) are operable with rotational speed control, and in particular, the one or more auxiliary drives (3.1, 3.2) are designed as low-voltage motors.

3. Device according to Claim 1 or 2,
   **characterized**
   **in that** the one or more auxiliary drives (3.1, 3.2) have in each case one external cooler, which is designed as an external fan (12, 13) with separate fan motor and which has at least one sensor (32, 33) for monitoring the winding temperature at the separate fan motor.

4. Device according to Claim 1 or 2,
   **characterized**
   **in that** the one or more auxiliary drives (3.1, 3.2) have in each case one external cooler, which is designed as a water-type cooler and which has a sensor for monitoring the cooling water temperature in the cooler return line and/or a sensor for monitoring the cooling water pump.

5. Device according to any of the preceding claims,
   **characterized**
   **in that** the auxiliary drive connection acts from an auxiliary drive shaft (16.1, 16.2) via a second transmission stage (8) directly on the internal gear (4) or the pinion (4.1).

6. Device according to any of Claims 1 to 4,
   **characterized**
   **in that** the auxiliary drive connection acts from an auxiliary drive shaft (16.1, 16.2) via a first transmission stage (6.1, 6.1a, 6.1b, 6.2, 6.2a, 6.2b) on the planet carrier (10), via a second transmission stage (8.1) on an intermediate shaft (16.3) and via a third transmission stage (19.1, 19.2, 19.3) on the internal gear (4) or the pinion (4.1), wherein the first transmission stage (6.1a, 6.1b, 6.2a, 6.2b) and/or the third transmission stage (19.1, 19.2, 19.3) is preferably constructed as a gear train composed of in each case at least two gearwheels.

7. Device according to Claim 6,
   **characterized**
   **in that** the clutch (11.2) is arranged between the second transmission stage (8) and the third transmission stage (19.1, 19.2, 19.3).

8. Device according to any of the preceding claims,
   **characterized**
   **in that** the clutch (11.1, 11.2) is designed such that, in the non-activated state, in particular in the event of an energy failure, it moves into the closed state, and in that the clutch (11.1, 11.2) is preferably designed as a multiplate clutch or dog clutch or viscous coupling or hydrodynamic clutch.

9. Device according to any of the preceding claims,
   **characterized**
   **in that** said device is designed such that, of the three rotational speeds (n1, n2, n3) : main drive machine (2), output shaft (15) and auxiliary drive (3.1, 3.2), at least two rotational speeds can be detected or measured, in particular by means of pulse generators (22.1, 22.2, 30) on the drive and/or rotational speed sensor (20, 21, 31) .

10. Device according to any of the preceding claims,
    **characterized**
    **in that** the one or more auxiliary drives (3.1, 3.2) and/or the main drive machine (2) have a sensor (24, 28, 26) for detecting the winding temperature and/or a sensor (25, 29, 27) for detecting the bearing temperature.

**11.** Method for rotational speed limitation on a drive arrangement according to any of the preceding claims in the event of failure or fast shutdown of the main drive machine (2) or of an auxiliary drive (3.1, 3.2), wherein the following method steps are performed:

> A) detecting a failure or a fast shutdown of the main drive machine (2) or of an auxiliary drive (3.1, 3.2);
> S) and subsequently closing the clutch (11).

**12.** Method according to Claim 11,
**characterized**
**in that** the following steps are additionally performed:

> B) repeatedly determining or measuring the rotational speeds at one of the auxiliary drives (3.1, 3.2) or the planet carrier (10), at the input shaft (14) or the main drive machine (2) and at the output shaft (15) or the drive machine (1);
> C) calculating the synchronization point from the condition: rotational speed (n2) of the main drive machine before the closing of the clutch (11) is equal to the rotational speed (n2) after the closing of the clutch (11);
> S1) immediately closing the clutch (11) only if the rotational speed (n3) of the auxiliary drive is moving away from the synchronization rotational speed (n_syn),
> S2) otherwise closing the clutch (11) with a delay, specifically when rotational speed (n3) of the auxiliary drive deviates from the synchronization rotational speed (n_syn) at most by 5%, preferably at most by 3%.

**13.** Method according to Claim 11 or 12,
**characterized**
**in that** an impending failure or fast shutdown of the main drive machine (2) are detected already before the onset thereof by virtue of upper temperature limits for the winding temperature and/or for the bearing temperature of the drives being monitored by means of one or more temperature sensors (24, 26, 28 and/or 25, 27, 29).

**14.** Method according to any of Claims 11 to 13,
**characterized**
**in that** present acceleration values from the measured or determined rotational speeds (n1, n2, n3) are additionally used for the detection of a failure or impending failure.

**15.** Method according to any of Claims 11 to 14,
**characterized**
**in that**, in the event of a failure or malfunction of the main drive machine (2), as a further method step, a rotational speed preset or torque preset is applied to the auxiliary drives (3.1, 3.2) in order to bring these into the vicinity of the synchronization rotational speed.

**Revendications**

**1.** Dispositif d'entrainement comprenant une boîte mixte (17), une machine d'entraînement principale (2), qui est reliée avec un arbre d'entrée (14) de la boîte mixte, un ou plusieurs entraînements secondaires (3.1, 3.2) et un arbre de sortie (15) de la boîte mixte, qui peut être relié avec une machine de travail (1), la boîte mixte (17) comprenant un engrenage planétaire (18) pourvu d'une couronne (4), d'un pignon planétaire (7), d'un porte-satellites (10) et de plusieurs pignons satellites (5), l'arbre d'entrée (14) étant relié avec la couronne (4), l'arbre de sortie (15) avec le pignon planétaire (7) et le ou les entraînements secondaires (3.1, 3.2) avec le porte-satellites (10) par l'intermédiaire d'un premier étage de transmission (6.1, 6.1a, 6.1b, 6.2, 6.2a, 6.2b) présentant un rapport de transmission constant (i_SG1),
**caractérisé en ce que**
une liaison d'entraînement supplémentaire présentant un rapport de transmission constant (i_SG1, i_SG2, iSG3) est présente entre l'entraînement secondaire (3.1, 3.2) d'un côté et la couronne (4) ou un pignon (4.1) sur l'arbre d'entrée de l'autre côté, un embrayage commutable (11.1, 11.2) étant présent dans cette liaison d'entraînement supplémentaire, qui peut activer ou couper la liaison d'entraînement supplémentaire de telle sorte qu'en cas de coupure par l'embrayage (11.1, 11.2), la liaison entre l'entraînement secondaire (3.1, 3.2) et le porte-satellites (10) reste activée par le premier étage de transmission (6.1, 6.1a, 6.1b, 6.2, 6.2a, 6.2b), et
**en ce que** le ou les entraînements secondaires (3.1, 3.2) comprennent chacun un refroidissement externe, qui est réalisé sous la forme d'un aérateur externe (12, 13) pourvu d'un moteur d'aérateur séparé, ou **en ce que** le ou les entraînements secondaires (3.1, 3.2) comprennent chacun un refroidissement externe, qui est réalisé sous la forme d'un refroidisseur à eau.

2. Dispositif selon la revendication 1, **caractérisé en ce que** la machine d'entraînement principale (2) ne peut être exploitée qu'à une vitesse de rotation constante et le ou les entraînements secondaires (3.1, 3.2) peuvent être exploités à une vitesse de rotation réglée et notamment le ou les entraînements secondaires (3.1, 3.2) sont réalisés sous la forme de moteurs basse tension.

3. Dispositif selon la revendication 1 ou 2, **caractérisé en ce que** le ou les entraînements secondaires (3.1, 3.2) comprennent chacun un refroidisseur externe, qui est réalisé sous la forme d'un aérateur externe (12, 13) pourvu d'un moteur d'aérateur séparé et comprend au moins un capteur (32, 33) pour la surveillance de la température d'enroulement sur le moteur d'aérateur séparé.

4. Dispositif selon la revendication 1 ou 2, **caractérisé en ce que** le ou les entraînements secondaires (3.1, 3.2) comprennent chacun un refroidisseur externe, qui est réalisé sous la forme d'un refroidisseur à eau et comprend un capteur pour la surveillance de la température de l'eau de refroidissement dans le reflux du refroidisseur et/ou un capteur pour la surveillance de la pompe à eau de refroidissement.

5. Dispositif selon l'une quelconque des revendications précédentes, **caractérisé en ce que** la liaison d'entraînement supplémentaire agit depuis un arbre d'entraînement secondaire (16.1, 16.2) par l'intermédiaire d'un deuxième étage de transmission (8) directement sur la couronne (4) ou le pignon (4.1).

6. Dispositif selon l'une quelconque des revendications 1 à 4, **caractérisé en ce que** la liaison d'entraînement supplémentaire agit depuis un arbre d'entraînement secondaire (16.1, 16.2) par l'intermédiaire d'un premier étage de transmission (6.1, 6.1a, 6.1b, 6.2, 6.2a, 6.2b) sur le porte-satellites (10), par l'intermédiaire d'un deuxième étage de transmission (8.1) sur un arbre intermédiaire (16.3) et par l'intermédiaire d'un troisième étage de transmission (19.1, 19.2, 19.3) sur la couronne (4) ou le pignon (4.1), le premier étage de transmission (6.1a, 6.1b, 6.2a, 6.2b) et/ou le troisième étage de transmission (19.1, 19.2, 19.3) étant de préférence conçus sous la forme d'un rouage constitué à chaque fois par au moins deux roues dentées.

7. Dispositif selon la revendication 6, **caractérisé en ce que** l'embrayage (11.2) est agencé entre le deuxième étage de transmission (8) et le troisième étage de transmission (19.1, 19.2, 19.3).

8. Dispositif selon l'une quelconque des revendications précédentes, **caractérisé en ce que** l'embrayage (11.1, 11.2) est réalisé de telle sorte qu'il passe dans l'état fermé dans l'état non commandé, notamment en cas de défaillance d'alimentation, et **en ce que** l'embrayage (11.1, 11.2) est de préférence réalisé sous la forme d'un embrayage multidisque ou d'un embrayage à griffes ou d'un visco-coupleur ou d'un embrayage hydrodynamique.

9. Dispositif selon l'une quelconque des revendications précédentes, **caractérisé en ce que** celui-ci est réalisé de telle sorte que parmi les trois vitesses de rotation (n1, n2, n3) : la machine d'entraînement principale (2), l'arbre de sortie (15) et l'entraînement secondaire (3.1, 3.2) peuvent enregistrer ou mesurer au moins deux vitesses de rotation, notamment à l'aide d'émetteurs d'impulsions (22.1, 22.2, 30) sur l'entraînement et/ou le capteur de vitesse de rotation (20, 21, 31).

10. Dispositif selon l'une quelconque des revendications précédentes, **caractérisé en ce que** le ou les entraînements secondaires (3.1, 3.2) et/ou la machine d'entraînement principale (2) comprennent un capteur (24, 28, 26) pour l'enregistrement de la température d'enroulement et/ou un capteur (25, 29, 27) pour l'enregistrement de la température de palier.

11. Procédé de limitation de la vitesse de rotation sur un agencement d'entraînement selon l'une quelconque des revendications précédentes en cas de défaillance ou de coupure rapide de la machine d'entraînement principale (2) ou d'un entraînement secondaire (3.1, 3.2), les étapes de procédé suivantes étant réalisées :

    A) l'identification d'une défaillance ou d'une coupure rapide de la machine d'entraînement principale (2) ou d'un entraînement secondaire (3.1, 3.2) ;
    S) et ensuite la fermeture de l'embrayage (11).

12. Procédé selon la revendication 11, **caractérisé en ce que** les étapes suivantes sont en outre réalisées :

B) la détermination ou mesure répétée des vitesses de rotation sur un des entraînements secondaires (3.1, 3.2) ou le porte-satellites (10), sur l'arbre d'entrée (14) ou la machine d'entraînement principale (2) et sur l'arbre de sortie (15) ou la machine de travail (1) ;

C) le calcul du point de synchronisation à partir de la condition : la vitesse de rotation (n2) de la machine d'entraînement principale est avant la fermeture de l'embrayage (11) égale à la vitesse de rotation (n2) après la fermeture de l'embrayage (11) ;

S1) la fermeture immédiate de l'embrayage (11) uniquement si la vitesse de rotation (n3) de l'entraînement secondaire s'éloigne de la vitesse de rotation de synchronisation (n_syn),

S2) sinon, la fermeture retardée de l'embrayage (11), et ce lorsque la vitesse de rotation (n3) de l'entraînement secondaire diffère d'au plus 5 %, de préférence d'au plus 3 %, de la vitesse de rotation de synchronisation (n_syn).

13. Procédé selon la revendication 11 ou 12, **caractérisé en ce qu'**une défaillance ou coupure rapide imminente de la machine d'entraînement principale (2) est déjà identifiée avant son occurrence en surveillant des limites supérieures de température pour la température d'enroulement et/ou pour la température de palier des entraînements par un ou plusieurs capteurs de température (24, 26, 28 et/ou 25, 27, 29).

14. Procédé selon l'une quelconque des revendications 11 à 13, **caractérisé en ce que,** pour l'identification d'une défaillance ou défaillance imminente, des valeurs d'accélération actuelles sont en outre utilisées à partir des vitesses de rotation mesurées ou déterminées (n1, n2, n3).

15. Procédé selon l'une quelconque des revendications 11 à 14, **caractérisé en ce que,** lors de la défaillance ou du mauvais fonctionnement de la machine d'exploitation principale (2), une spécification de vitesse de rotation ou une spécification de moment de rotation sur les entraînements secondaires (3.1, 3.2) a lieu en tant qu'étape de procédé supplémentaire, afin de les rapprocher de la vitesse de rotation de synchronisation.

**Fig.1**

**Fig.2a**

**Fig.2b**

**Fig.3a**

**Fig.3b**

**Fig.4a**

**Fig.4b**

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014210864 A1

- WO 2016172742 A1